# EUROPÄISCHE PATENTANMELDUNG

(11) **EP 1 016 456 A2**
(43) Veröffentlichungstag der Anmeldung: **05.07.2000**
(21) Anmeldenummer: 99124530.9
(22) Anmeldetag: 09.12.1999
(51) Int. Cl.: B01J 19/12

(54) **Optische Anordnung für kontinuierlich betriebene Photoinitierungen in Strömungsreaktoren, insbesondere für die Photoinitiierung der Umsetzung von Methan und Phosphortrichlorid zu Methyldichlorphosphan**

(30) Priorität: 15.12.1998 DE 19857756
(71) Anmelder: Aventis Research & Technologies GmbH & Co. KG, 65926 Frankfurt am Main (DE)
(72) Erfinder: Zeyss, Sabine, Dr., 65779 Kelkheim-Fischbach (DE); Kühlein, Klaus, Prof. Dr., 65779 Kelkheim (DE); Hagemeyer, Alfred, Dr., 48431 Rheine (DE); Werner, Harald, Dr., 61350 Bad Homburg (DE); Dingerdissen, Uwe, Dr., 64342 Seeheim-Jugenheim (DE); Bäuerle, Dieter, Prof. Dr., 4203 Altenberg (AT); Heitz, Johannes, Dr., 4040 Linz (AT)

(57) **Zusammenfassung**

Optische Anordnung zur Einkopplung von Strahlung mittels eines Excimer-Lasers in einen Reaktionsraum für kontinuierlich betriebene Photoinitiierungen in einen Strömungsreaktor, wobei um den Reaktionsraum mindestens ein elliptischer Reflektor so angeordnet ist, daß die Strahlung innerhalb des Reaktionsraums fokussiert wird, indem der Excimer-Laser und das Reaktionsrohr sich jeweils in einem der beiden Brennpunkte der ellpitischen Querschnittsfläche des Reflektors befinden.

## Beschreibung

Die vorliegende Erfindung beschreibt einen optische Anordnung zur Einkopplung von Strahlung in einen Reaktionsraum für kontinuierlich betriebene Photoinitiierungen in Strömungsreaktoren, insbesondere zur Einkopplung von UV-Excimer-Strahlung bei der Photoinitiierung der Umsetzung von Alkanen mit einem Phosphortrihalogenid zu Alkyldihalogenphosphanen.

Alkyldihalogenphosphane sind wichtige Vor- und Zwischenprodukte in der chemischen Industrie. Sie finden u.a. Verwendung als Kraftstoffadditive, bei der Herstellung von Flammschutzmitteln und flammhemmenden Zusätzen für Polymere, als Weichmacher für Kunststoffe, als Stabilisatoren für Polyolefine und als Vorprodukte für Pflanzenschutzmittel. Insbesondere Methyldichlorphosphan (MDP) ist ein Precursor für eine Reihe von kommerziellen Bioziden und Herbiziden und wird daher großtechnisch hergestellt.

Bei den bekannten Verfahren zur Herstellung von Alkyldihalogenphosphanen wird die Reaktion von Methan und PCl₃ zu MDP (CH₃PCl₂) und HCl bei hohen Temperaturen von 500 - 600°C und in einem Druckbereich von typischerweise 1 bis 10 bar durchgeführt, wobei erhebliche Mengen an Chlorkohlenwasserstoffen wie CCl₄ als Katalysator zugesetzt werden. Die Reaktion verläuft über einen thermisch initiierten Radikalmechanismus, mit z.B. CCl₃· als Starterradikalen. Dabei entsteht ein kompliziertes Produktspektrum mit zahlreichen Nebenprodukten. Methan wird im stöchiometrischen Überschuß eingesetzt und im Kreis gefahren. Für die Aufbereitung des Produktgemisches sind weitere Additive erforderlich. Der thermische Prozeß ist mit zahlreichen Nachteilen behaftet, von denen die Korrosion und Verkokung im Reaktionsrohr, der unvollständige Umsatz und die Beseitigung der Nebenprodukte besonders hervorzuheben sind. Daher besteht noch erhebliches Verbesserungspotential für diesen Prozeß.

So beschreibt z.B. US 3 210 418 die Herstellung aliphatischer Alkyl-Dichlorphosphane aus Alkan und Phosphortrihalogenid in Gegenwart von O₂ oder Cl₂ oder NOₓ als Katalysator. Die Beispiele behandeln die Reaktionen von PCl₃ mit Methan, Ethan, Ethylen, Butan, Benzol und Chlorbenzol. Die Reaktion von PCl₃ und Methan zu MDP in Gegenwart von O₂ als Katalysator liefert je nach Reaktionsbedingungen Umsätze zwischen 1 und 23%. Dabei wurde erkannt, daß der Umsatz um so höher ist, je größer das Methan/PCl₃-Verhältnis ist. Mit Cl₂ als Katalysator wird ein Umsatz von 9% erreicht.

Die Alkylierung von PCl₃ mit Methan und Ethan wurde von Pianfetti (J. Amer. Chem. Soc. 84 (1962) 851-854) beschrieben. Er stellte fest, daß die Reaktion durch O₂ katalysiert wird und durch Propylen inhibiert wird. Ohne O₂-Katalyse werden bei hohen Temperaturen >550°C Umsätze von 10-15% zu MDP erreicht, während unterhalb von 500°C kein Produkt gefunden wird. Mit O₂ als Katalysator werden dagegen bei 575°C maximal 20% Umsatz erzielt. Es entsteht ein gummiartiger fester Rückstand.

Ein photochemisches Verfahren zur Herstellung von Dihalogenphosphinen wird in DE-A-215 6810 beschrieben. Hierbei findet die Umsetzung eines Phosphorhalogenids mit einem Alkan/Cycloalkan unter UV-Bestrahlung in flüssiger Phase statt, wobei die UV-Bestrahlung mittels Lampen erfolgt, die eine Strahlung der Wellenlänge unter 320 nm, besonders zwischen 210 nm und 300 nm, aussenden. Die Phosphorhalogenide bilden dabei nach einer bestimmten Bestrahlungszeit teilweise feste Verbindungen, die sich auf dem Lampenträger ablagern. Bei der hier verwendeten Hg-Damplampe wurde mit komplizierten Filtern der Spektralbereich um 254 nm ausgekoppelt. In den Beispiele wird die Umsetzung von PCl₃ mit Cyclohexan, Isobutan, Heptan, Dodecan, und Cyclodecan in flüssiger Phase beschrieben. Die erzielten Produktausbeuten sind trotz sehr langer Bestrahlungszeiten (ca. 20 Minuten) sehr schlecht (ca. 2% Ausbeute). Es entsteht ein 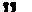 festes gelb-oranges Produkt, das den Lampenträger undurchsichtig macht".

Bei konventionellen Photoinitiierung mit Breitband-UV-Lampen ist die Selektivität sehr gering. Die erhaltenen Alkyldichlorphosphane befinden sich immer im Gemisch mit einer großen Menge unerwünschter Nebenprodukte, die schwierig abzutrennen sind.

In der nicht vorveröffentlichten Deutschen Patentanmeldung 19840553.7, auf die hiermit ausdrücklich Bezug genommen wird, wird ein Verfahren zur Herstellung von Alkyldihalogenphosphanen der Formel RPHal₂, mit R= C₁-C₄-Alkyl, vorzugsweise R=CH₃, und Hal= Halogen, vorzugsweise Hal=Cl, durch Umsetzung eines aliphatischen C₁-C₄-Kohlenwasserstoffs mit einem Phosphortrihalogenid zu dem entsprechenden Alkydihalogenphosphan beschrieben, wobei die Reaktion photochemisch mit einem UV-Excimerlaser initiiert wird.

Bei dem in dieser Anmeldung beschriebenen Verfahren wird eine ein C₁-C₄-Alkan und ein Phosphortrihalogenid, insbesondere Phosphortrichlorid, enthaltende Lösung einer UV-Excimer-Strahlung bei Temperaturen im Bereich von 0 bis 650°C ausgesetzt. In einer bevorzugten Ausführungsform wird das Verfahren in der Gasphase bei Drucken im Bereich von 500mbar bis 25 bar durchgeführt.

Durch die Einstrahlung der monochromatischen UV-Excimer-Strahlung erfolgt die Photoinitiierung einer Radikalkettenreaktion, wobei durch die Photodissoziation des Katalysators und/oder der Reaktanden Starterradikale gebildet werden, die die Radikalkettenreaktion initiieren und aufrechterhalten, so daß mit hoher Selektivität die gewünschten Alkyldihalogenphosphane gebildet werden.

Die Aufgabe der vorliegenden Erfindung ist es eine optische Anordnung zur Einkopplung von UV-Eximer-Strahlung in einen Reaktionsraum für kontinuierlich betriebene Photoinitiierungen in Strömungsreaktoren zur Verfügung zu stellen, die die effiziente Einkopplung der UV-Excimer-Strahlung in den Reaktionsraum gewährleistet.

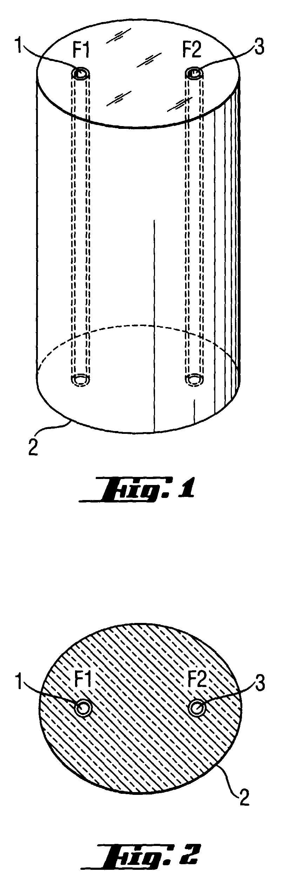

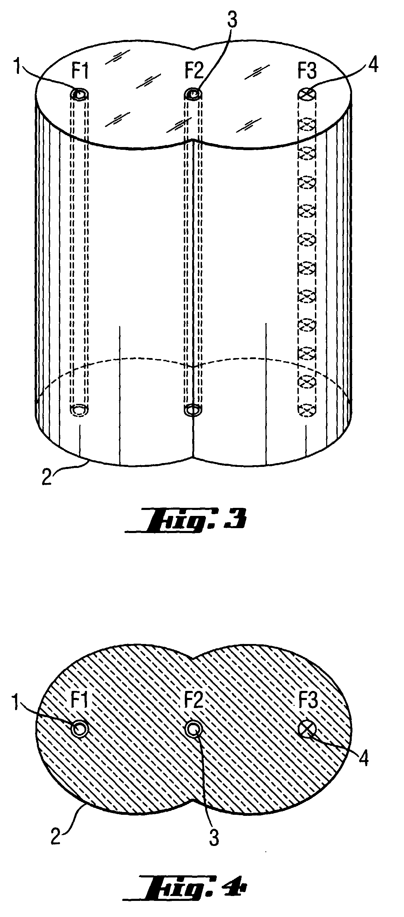

Die vorliegende Erfindung löst diese Aufgabe und zeigt in Figur 1 eine optische Anordnung zur Einkopplung von Strahlung mittels eines Excimer-Lasers in einen Reaktionsraum für kontinuierlich betriebene Photoinitiierungen in einen Strömungsreaktor, wobei um das Reaktionsrohr mindestens ein elliptischer Reflektor (2), z.B. in Form eines Zylinderspiegels mit elliptischer Querschnittsfläche, so angeordnet ist, daß die Strahlung innerhalb des Reaktionsraums (3) fokussiert wird, indem der Excimer-Laser (F1) und das Reaktionsrohr (F2) sich jeweils in einem der beiden Brennpunkte der elipitischen Querschnittsfläche des Reflektors befinden. (Figur 2)

Mit der erfindungsgemäßen optischen Anordnung ist es möglich, hohe UV-Intensitäten in die Reaktionsmischung einzubringen und so eine hohe Konzentration an durch Photodissoziation entstandenen Starterradikalen zu erzeugen.

In einer weiteren erfindungsgemäßen Ausführungsform gemäß Figur 3 ist es möglich in die optische Anordnung eine Heizvorrichtung einzufügen, so daß die Anordnung einen elliptischen Reflektor (F1) für die Excimerlampe, das Reaktionsrohr, (F2) einen weiteren elliptischen Reflektor für die Heizvorrichtung und eine Heizvorrichtung, z.B. eine IR-Heiz-Lampe, (F4) enthält (F3). Figur 4 zeigt die Querschnittsfläche von Figur 3.
Konventionelle Mantel-Heizmethoden wie Röhrenöfen, Heizbänder, Salzbäder etc. können nicht verwendet werden, da der Heizmantel UV-undurchlässig ist. Durch Verwendung von IR-Strahlung zur Aufheizung der Reaktionsmischung auf die entsprechenden Temperaturen wird dieses Problem umgangen und die Einkopplung von UV-Strahlung in keiner Weise beeinträchtigt. Ein weiterer Vorteil ist, daß bei entsprechender Wahl des Reaktionsrohres (transparent im IR) das gasförmige Reaktionagemisch und nicht das Reaktorrohr selbst geheizt wird. Dadurch können Niederschläge, die bevorzugt an heißen Stellen auftreten, leichter vermieden werden, ohne daß eine zusätzliche Kühlung nötig ist.

Verschiedene Variationen der vorliegenden Erfindung sind denkbar.
So können beispielsweise mehrere Lampen (Excimer-Laser) parallel und in Serie zusammengeschaltet werden.
In einem technischen Reaktor kann der optische Aufbau derart gestaltet werden, daß mehrere Lampen, jede mit ihrem eigenen elliptischen Halbspiegel, das Reaktionsrohr konzentrisch umgeben und daß viele dieser 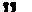 Lampenbündel" entlang Ðes Reaktionsrohres hintereinander angeordnet werden.

Auch die Kombination der photochemischen und der thermischen Initiierung ist in vielen Variationen denkbar. Dabei kann über die gesamte Länge des Reaktionsrohres zonenweise, intermittierend oder rampenförmig geheizt werden und unabhängig davon abschnittsweise oder durchgehend mit UV-Licht unter Verwendung der elliptischen Spiegel bestrahlt werden

Die erfindungsgemäße optische Anordnung kann vorzugsweise bei Photoinitiierung der Alkylierung von Phosphortrihalogenidenden zu den entsprechenden Alkydihalogenphosphanen, insbesondere bei der Umsetzung von Methan mit Phosphortrichlorid zu Methyldichlorphosphan (MDP), eingesetzt werden. Der Vorteil bei diesem Verfahren ist, daß die Photoinitiierung der Radikalkettenreaktion durch UV-Excimer-Strahlung gegenüber der thermischen Initiierung bei tieferen Reaktionstemperaturen erfolgen kann und somit auch deutlich bessere Ausbeuten an den entsprechenden Alkyldihalogenphosphanen erzielt werden können.

Im Vergleich zu den konventionellen breitbandigen Quecksilberdampflampen haben monochromatische UV-Excimer-Strahlungsquellen wie gepulste Excimer-Laser und inkohärente Excimer-Lampen den Vorteil, daß gezielt auf der 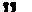 richtigen" (d.h. für die Photoinitiierung wirksamsten) Wellenlänge eingestrahlt werden kann und somit die unerwünschten kurz- und langwelligen Spektralanteile der Hg-Lampen vermieden werden.

Die Bestrahlungsdauer, d.h. die Verweilzeit des Gemisches der Reaktionsbestandteile im Reaktionsraum liegt üblicherweise im Bereich von 0,01sec bis 1000 sec. Bei kontinuierlicher Reaktionsführung wird vorzugsweise kontinuierlich eingestrahlt.
Durch die Photodissoziation der Reaktanden werden Starterradikale gebildet, die eine Radikalkettenreaktion initiieren und aufrechterhalten, die mit hoher Selektivität die gewünschten Alkyldihalogenphosphane liefert.

Die Reaktion kann gegebenenfalls in Gegenwart eines Katalysators , wie z.B.Cl₂, O₂, COCl₂, NOₓ oder deren Mischungen, durchgeführt werden.
Die Menge des Katalysators bezogen auf das Phosphortrihalogenid liegt im Bereich von 0 bis 50 mol%, vorzugsweise 0,1 bis 20 mol%.

Die Reaktion kann sowohl kontinuierlich wie diskontinuierlich durchgeführt werden.

Die Isolierung der entstandenen Dihalogenphosphane kann nach bekannten Methoden, z.B. durch Kondensation des Reaktionsproduktes mit anschließender fraktionierter Destillation erfolgen.

Zur Photoinitiierung können sowohl UV-Lichtquellen als auch Lichtquellen, die sichtbares Licht aussenden, eingesetzt. Da die Absorptionskoeffizienten der bei diesem Verfahren verwendeten Stoffe im ultravioletten Spektralbereich wesentlich höher sind als im sichtbaren Spektralbereich, kann mit entsprechend niedrigeren Leistungsdichten gearbeitet werden, falls UV-Lichtquellen eingesetzt werden. Da dadurch ein wesentlich höherer Durchsatz erreicht wird, ist nur der Einsatz von UV-Lichtquellen sinnvoll, wobei die Quellen mit den kürzesten Wellenlängen die höchste Effizienz aufweisen.

Zur Erzeugung von UV-Strahlung werden Lampen, Laser oder sonstige Strahlungsquellen wie Elektronenspeicherringe (Synchrotrons) oder Plasmaentladungen eingesetzt. Bei der Benutzung von Lampen stehen vor allem Hg-Dampflampen (mit starken Emissionslinien bei einer Wellenlänge von 185 nm und 254 nm) und spektral eng begrenzte Excimerlampen, bei denen die UV-Strahlung durch den Zerfall von Excimeren oder Exciplexen wie Kr₂* (Wellenlänge 146 nm), Xe₂* (172 nm), KrCl* (222 nm) oder XeCl* (308 nm) entsteht, zur Verfügung. Als leistungsstarke UV-Laser werden gepulste Excimerlaser eingesetzt. Auch hier entsteht das Licht durch den Zerfall von Excimeren oder Exciplexen wie F₂* (154 nm), ArF* (193 nm), KrF* (248 nm), XeCl* (308 nm) und XeF* (351 nm). Es können auch frequenzvervielfachte Nd-YAg:Laser (Wellenlänge 1064 nm / n; n = 3, 4, 5, ...) verwendet werden. Weitere Quellen für UV-Strahlung sind Sychrotrons, die eine breitbandige Strahlung bis in den Röntgenbereich liefern, und das Licht einer Plasmaentladung bei niedrigem Druck.

In den Büchern 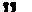 Laser Processing and Chemistry" (Springer-Verlag, Berlin-Heidelberg-New York, 1996) und 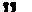 Chemical Processing with Lasers" (Springer-Verlag, Berlin-Heidelberg-New York, 1986) von D. Bäuerle werden detaillierte Informationen zu Strahlungsquellen und Verfahren gegeben.

Zur Photoinitiierung werden üblicherweise UV-Quecksilberdampflampen eingesetzt. Hg-Dampflampen sind breitbandige Strahlungsquellen mit Spektralanteilen sowohl im kurzwelligen VUV-Bereich (Vakuum-UV) als auch im sichtbaren Bereich. Damit ist die Leistungsdichte im erforderlichen (für die Photoinitiierung wirksamen) Spektralbereich von ca. 150 - 350 nm also wesentlich geringer als die Nennleistung der Lampen. Ferner können die unerwünschten kurz- und langweiligen Spektralanteile zu Nebenreaktionen, Ablagerungen auf den Strahlungsquellen bzw. Reaktorwandungen oder Erwärmungen führen und müssen daher oft ausgefiltert werden (Energievernichtung).

Der wichtigste, halbwegs selektive (konventionelle) UV-Strahlertyp basiert auf der Niederdruckglimmentladung in Quecksilber/Edelgas-Gemischen, wobei die Quecksilberresonanzlinien bei 254 nm und schwächer bei 185 nm (zusätzlich zum noch schwächeren Kontinuum) emittiert werden. Verglichen mit Excimer-Strahlern ist die Bandbreite immer noch erheblich größer. Außerdem ist die Wellenlänge nicht variabel, sondern man ist auf 254 nm festgelegt. Alle anderen konventionellen UV-Quellen wie Xenon-, Deuteriumlampe, Argon-Miniarc und Niederdruck-Edelgasentladungen weisen viel zu niedrige Photonenflüsse auf und sind technisch uninteressant.
Eine Alternative zu den breitbandigen Hg-Lampen sind monochromatische UV-Excimer-Strahler. Im Spektralbereich zwischen 100 - 450 nm stehen etwa 20 diskrete Wellenlängen zur Verfügung. Mit Excimer-Strahlungsquellen kann gezielt auf der richtigen Wellenlänge eingestrahlt werden und somit die obengenannten Nachteile vermieden werden. Zudem führt die geringere Nennleistung der Excimer-Strahlungsquellen (bei besserer Effizienz der Radikalbildung) zu direkten Einsparungen an elektrischer Energie.

Durch Einsatz von monochromatischer UV-Excimer-Strahlung bei der erfindungsgemäßen optischen Anordnung ist es möglich eine hohe Selektivität zu erzielen. Ferner sind die Reaktionen auf diese Weise leicht steuerbar und erfordern keine aufwendigen Apparaturen, da sowohl Excimer-Laser als auch Excimer-Lampen-Module als Komplettsysteme kommerziell erhältlich sind.
Da Excimerstrahlung aufgrund der Physik ihrer Erzeugung immer monochromatisch ist und die optimale (diskrete) Wellenlänge vom Experimentator wählbar ist, entfallen die für Hg-Lampen notwendige komplizierte Filter- und Kühl-Peripherie, so daß Excimerstrahler weniger aufwendig, wesentlich kompakter, sparsamer im Energieverbrauch, leicht steuerbar und einfach zu bedienen sind.

Erfindungsgemäß verwendete UV-Strahlungsquellen sind Excimer-Strahlungsquellen wie gepulste Excimer-Laser oder inkohärente Excimer-Lampen. Besonders bevorzugt sind Excimer-Lampen. Gegenüber den Excimer-Lasern zeichnen sich Excimer-Lampen durch größere Zuverlässigkeit, einfachere Handhabung und geringere Betriebskosten aus. Erfindungsgemäß wird die UV-Excimer-Strahlung insbesondere mittels gepulster Excimer-Laser oder mittels inkohärenter Excimer-Lampen erzeugt.

Eine Vielzahl von Methoden zur Erzeugung inkohärenter Excimerstrahlung ist untersucht worden, wobei ein spezieller Entladungstyp für industrielle Anwendungen großes Potential besitzt (Kogelschatz, Esrom, Laser und Optoelektronik 22(4) (1990) 55-59). Bei diesem neuen inkohärenten UV-Strahler werden Excimere in einer stillen elektrischen Entladung gebildet, einer Nichtgleichgewichtsentladung, die gelegentlich auch als Barrierenentladung bezeichnet wird. Das wichtigste Merkmal dieses Entladungstyps ist die Existenz (mindestens) einer dielektrischen Barriere, also eines Isolators, im Strompfad zwischen den Elektroden. Das Dielektrikum (z.B. Quarzrohr) bewirkt eine kapazitive Kopplung zwischen der treibenden elektrischen Wechselspannung und dem Entladungsplasma. Eine robuste Bauweise wird z.B. durch zwei koaxial angeordnete Quarzrohre ermöglicht, wobei ein ringförmiger Entladungsspalt entsteht. Die Quarzwände dienen gleichzeitig als Dielektrika. Beide Elektroden befinden sich außerhalb des Entaldungsraumes und kommen mit dem Plasma nicht in Berührung. Die UV-Strahlung kann nach innen oder nach außen (durch die z.B. als Drahtnetz ausgebildeten Elektroden) austreten. Die erreichbaren Leistungsdichten liegen mittlerweile bei 200 mW/cm² bei einer Bandbreite von nur ca. 5 nm. Durch Paralleischaltung mehrerer Entladungsröhren lassen sich sehr hohe UV-Strahlungsleistungen erzielen.

Der Excimerstrahler sendet Pakete von äußerst kurzen intensiven UV-Strahlungspulsen aus von jeweils nur einigen Nanosekunden Pulsdauer. Durch die äußere Versorgungsquelle kann sowohl die Intensität als auch die Dauer der Emissionsperioden gesteuert werden. Ein weiteres wichtiges Merkmal der Entladungsröhre ist der geschlossene Entladungsraum, der ausschließlich durch Quarzwände begrenzt wird. Dadurch ist die für die Excimerbildung erforderliche Reinheit der Gase über längere Zeit gewährleistet. Es zeichnet sich ab, daß die bei den Excimerlasern eingesetzten, umfangreichen Apparaturen für die Umwälzung und Reinigung der Gasmischungen für diese inkohärenten Excimerstrahler nicht erforderlich sind.

Bei der Anwendung der erfindungsgemäßen optischen Anordnung für die Photoinitiierung der Umsetzung von Alkanen mit Phosphortrihalogeniden kommt UV-Excimerstrahlung zum Einsatz, die vorteilhafterweise monochromatisch ist und hohe Leistungsspitzen aufweist. Geeignete Wellenlängen liegen im Bereich von 40 bis 400 nm. Bevorzugte Wellenlängen sind 172 nm (Xe₂*-Lampe), 193 nm (ArF*-Laser), 222 nm (KrCl*-Lampe), 248 nm (KrF*-Laser), 308 nm (XeCl*-Lampe) und 351 nm (XeF*-Laser).
Geeignete UV-Intensitäten liegen zwischen 0,01 und 100 W/cm². Bevorzugte Parameter sind UV-Strahlungsleistungen zwischen 0,1 und 20 W/cm².
Bei Einsatz gepulster Laser liegen die geeigneten Pulsfrequenzen im Bereich zwischen 0,1 und 5000 Pulse/s. Bei kontinuierlicher Fahrweise wird ununterbrochen eingestrahlt, beim Batchbetrieb liegen die Einstrahlzeiten zwischen 0,01 s und 1000 s.
Beim Einsatz von UV-Lampen, die nicht gepulst sind und wesentlich größere Bestrahlungsfenster als UV-Laser aufweisen können, wird bei kontinuierlicher Fahrweise ebenfalls kontinuierlich eingestrahlt. Beim Batchbetrieb liegen die geeigneten Bestrahlungszeiten zwischen 0,01s und 1h. Bevorzugte Bestrahlungszeiten liegen zwischen 0,1 s und 1000 s.

## Patentansprüche

1. Optische Anordnung zur Einkopplung von Strahlung mittels eines Excimer-Lasers in einen Reaktionsraum für kontinuierlich betriebene Photoinitiierungen in einen Strömungsreaktor, wobei um den Reaktionsraum mindestens ein elliptischer Reflektor so angeordnet ist, daß die Strahlung innerhalb des Reaktionsraums fokussiert wird, indem der Excimer-Laser und das Reaktionsrohr sich jeweils in einem der beiden Brennpunkte der ellpitischen Querschnittsfläche des Reflektors befinden.

2. Optische Anordnung nach Anspruch 1, dadurch gekennzeichnet, daß UV-Strahlung eingekoppelt wird.

3. Optische Anordnung nach einem der Ansprüche 1 oder 2, dadurch gekennzeichnet, daß die UV-Strahlung durch inkohärente UV-Excimer-Strahler erzeugt wird.

4. Optische Anordnung nach einem der vorhergehenden Ansprüche, dadurch gekennzeichnet, daß die optische Anordnung zusätzlich eine Heizvorrichtung enthält.

5. Optische Anordnung nach einem der vorhergehenden Ansprüche zur Photoinitiierung der Alkylierung von Phosphortrihalogeniden.

6. Optische Anordnung nach einem der vorhergehenden Ansprüche zur Photoinitiierung der Umsetzung von Methan und Phosphortrichlorid.
